# EUROPEAN PATENT APPLICATION

(11) **EP 2 518 853 A1**
(43) Date of publication of application: **31.10.2012**
(21) Application number: 12165488.3
(22) Date of filing: 25.04.2012
(51) Int. Cl.: H02J 3/14

(54) **Systems, methods, and apparatus for coordinated Volt/VAR control in power distribution networks**

(30) Priority: 27.04.2011 US 201113095263
(71) Applicant: General Electric Company, Schenectady, NY 12345 (US)
(72) Inventor: Krok, Michael Joseph, Niskayuna, NY New York 12309 (US); Ren, Wei, Niskayuna, NY New York 12309 (US); Genc, Sahika, Niskayuna, NY New York 12309 (US)
(74) Representative: Picker, Madeline Margaret

(57) **Abstract**

Certain embodiments of the invention may include systems, methods, and apparatus for providing coordinated voltlVAR control in power distribution networks. According to an example embodiment of the invention, a method is provided for coordinating voltage and volt-amps-reactive (VAR) control (VVC) in power distribution networks. The method can include receiving one or more VVC objective functions from a distribution management system (DMS) (102, 226); determining at least one microgrid conservation voltage reduction factor (CVRF); forecasting microgrid load profile for a predetermined period of time; controlling microgrid VVC resources based at least on the one or more received VVC objective functions; and communicating the at least one microgrid CVRF and the forecasted load profile to the DMS (226).

## Description

### FIELD OF THE INVENTION

This invention generally relates to power distribution networks, and in particular, to systems, methods, and apparatus for coordinating volt and volt-amp-reactive (VAR) control in power distribution networks.

### BACKGROUND OF THE INVENTION

When operating a power distribution network it is desirable to establish acceptable voltage conditions for all customers while delivering power as efficiently as possible. In many power distribution networks, the voltage profile along the distribution feeder and the flow of reactive power (also known as VARs) on the feeder are typically maintained by a combination of voltage regulators and switched capacitor banks installed at various locations on the feeder and in its associated substation.

Large distribution systems may include microgrids and non-microgrid branches. A microgrid typically includes localized groupings of loads, generation sources, and storage devices that are connected to a traditional centralized grid, or macrogrid. Optimizing an entire feeder network, including microgrids, and coordinating voltage and volt-amps-reactive (VAR) control can be a formidable task, particularly when network conditions change. Traditionally, feeder voltage regulators and switched capacitor banks are operated as independent devices, with no direct coordination between the individual controllers. Such an approach can be effective for maintaining acceptable voltage and reactive power flow near the controllers, but typically does not produce optimal results for the entire feeder.

### BRIEF SUMMARY OF THE INVENTION

Some or all of the above needs may be addressed by certain embodiments of the invention. Certain embodiments of the invention may include systems, methods, and apparatus for coordinated volt/VAR control in power distribution networks

According to an example embodiment of the invention, a method is provided for coordinated volt/VAR control in power distribution networks. According to an example embodiment of the invention, the method can include receiving one or more volt/volt-amps-reactive control (VVC) objective functions from a distribution management system (DMS); determining at least one microgrid conservation voltage reduction factor (CVRF); forecasting microgrid load profile for a predetermined period of time; controlling microgrid VVC resources based at least on the one or more received VVC objective functions; and communicating the at least one microgrid CVRF and the forecasted load profile to the DMS.

According to another example embodiment, a system is provided. The system includes at least one power distribution network; at least one distribution management system (DMS); one or more microgrids; one or more microgrid controllers (MGC) in communication with the one or more microgrids and the DMS, wherein the one or more MGC comprises at least one memory for storing data and computer-executable instructions. The system also includes at least one processor configured to access the at least one memory and further configured to execute the computer-executable instructions for: receiving one or more volt/volt-amps-reactive control (VVC) objective functions from a distribution management system (DMS); determining at least one microgrid conservation voltage reduction factor (CVRF); forecasting a microgrid load profile for a predetermined period of time; controlling microgrid resources based at least on the one or more received objective functions; and communicating the at least one microgrid CVRF and the forecasted load profile to the DMS.

According to another example embodiment, an apparatus is provided. The apparatus includes at least one distribution management system (DMS); one or more microgrid controllers (MGC) in communication with the one or more microgrids and the DMS, wherein the one or more MGC(s) comprises at least one memory for storing data and computer-executable instructions. The apparatus also includes at least one processor configured to access the at least one memory and further configured to execute the computer-executable instructions for: receiving one or more objective functions from a distribution management system (DMS); determining at least one microgrid conservation voltage reduction factor (CVRF); forecasting microgrid load profile for a predetermined period of time; controlling microgrid resources based at least on the one or more received objective functions; and communicating the at least one microgrid conservation voltage reduction factor (CVRF) and the forecasted load profile to the DMS.

Other embodiments of the invention are described in detail herein and can be understood with reference to the following detailed description, accompanying drawings, and claims.

### BRIEF DESCRIPTION OF THE DRAWINGS

Reference will now be made to the accompanying tables and drawings, which are not necessarily drawn to scale, and wherein:
FIG. 1 is a block diagram of an illustrative power distribution system, according to an example embodiment of the invention.
FIG. 2 is a block diagram of an illustrative microgrid controller and example network, according to an example embodiment of the invention.
FIG. 3 is a flow diagram of an example method according to an example embodiment of the invention.

### DETAILED DESCRIPTION OF EMBODIMENTS OF THE INVENTION

Embodiments of the invention will be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

An example large distribution system may include microgrids and non-microgrids. According to an example embodiment of the invention, a microgrid may be described as a localized grouping of loads, energy generation sources, and/or energy storage devices. In an example embodiment, the microgrid may operate connected to a traditional centralized grid, or macrogrid. From the point of view of the grid operator, an example microgrid may be connected to the larger network, and controlled as if it was a single entity. According to example embodiments of the invention, multiple dispersed microgrids, with their own power generation sources, may allow the microgrid to be isolated from the larger network, and may provide highly reliable electric power.

Certain embodiments of the invention may enable a relatively simplified coordination of volt/volt-amps-reactive control (VVC) among the non-microgrid and microgrid components of the distribution network. In an example embodiment, coordination of volt/volt-amps-reactive control (VVC) with the microgrid controllers (MGC) may simplify the overall VVC for the entire distribution system, and may facilitate optimizing the VVC of the near real-time control of the entire distribution system via the traditional distribution management system (DMS) with support from the MGC(s).

According to example embodiments of the invention, a centralized/distributed VVC may be utilized to control one or more parameters associated with the network, including minimizing losses, maximizing power factor, reducing or increasing loads, setting an average voltage level throughout the entire distribution system, and/or customizing voltage levels to specific portions of the network. According to example embodiments, each of parameters may achieved through the minimization of VVC control device setting changes (e.g., capacitor bank switching, and voltage regulator tap setting changes) over the course of day-to-day, season-to-season, and year-to-year operation which may maximize the lifetime of those devices.

Various controllers, communications networks, and processes may be utilized for coordinating voltage and volt-amps-reactive control (VVC) in power distribution networks, according to example embodiments of the invention, and will now be described with reference to the accompanying figures.

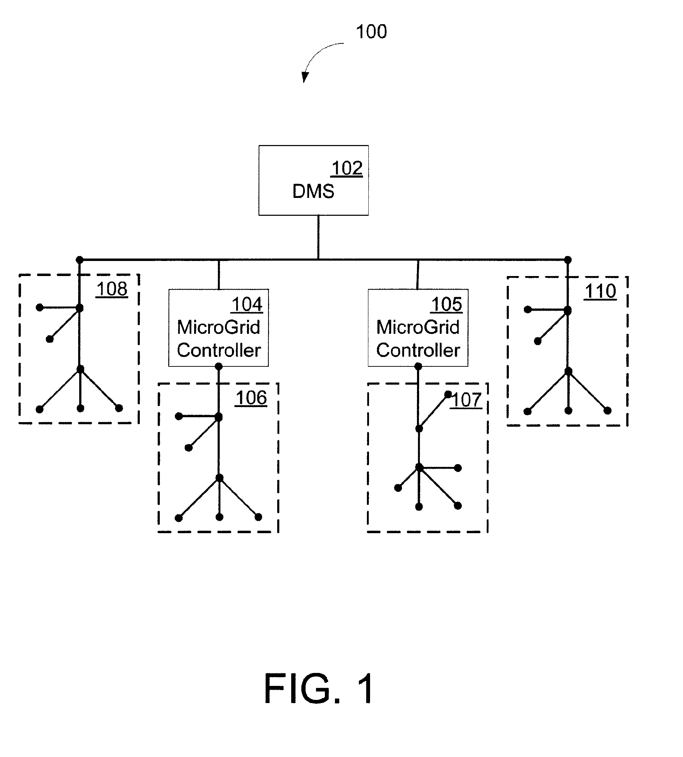

FIG. 1 illustrates an example power distribution network 100, according to an example embodiment of the invention. Example embodiments of the power distribution network 100 may include a distribution management system (DMS) 102 that may be utilized for coordinating/controlling various sections or branches of the network, including microgrids 104, 105, and non-microgrids 108, 110. According to an example embodiment, the DMS 102 may communicate with one or more microgrid controllers 104 105, and the microgrid controllers 104, 105 may further be utilized to control the microgrids 106, 107, so that the microgrids 106, 107 appear to the DMS 102 as respective single entities. In an example embodiment of the invention, the coordination between the DMS 102 and the microgrid controllers 104, 105 can simplify the voltage and volt-amps-reactive (VAR) control (VVC) in the power distribution network, since a part of the control is delegated to the one or more microgrid controllers 104, 105.

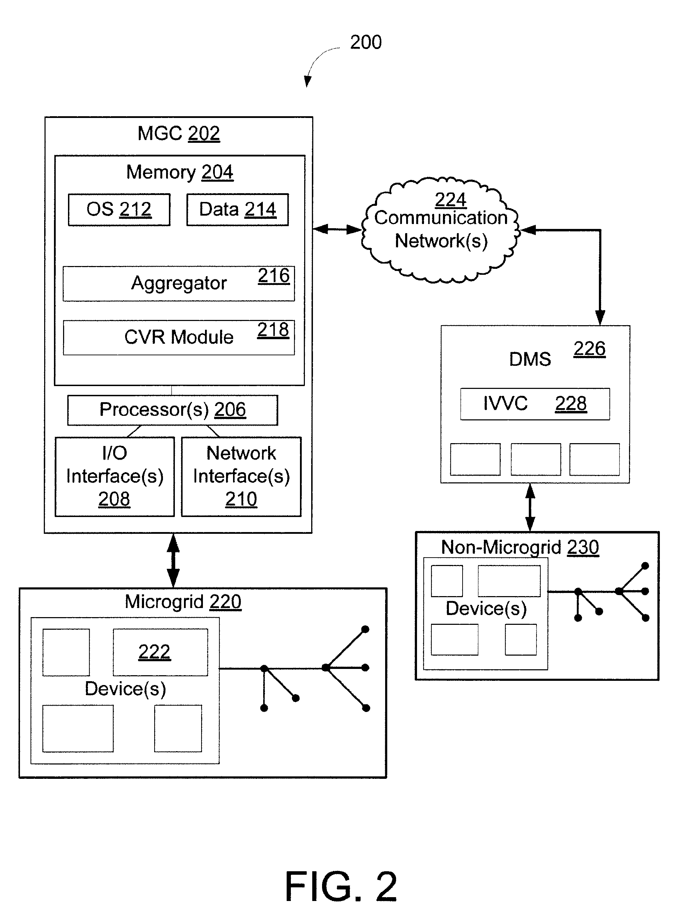

FIG. 2 depicts an example microgrid controller 202 within a distribution network 200 that may also include one or more microgrids 220, one or more distribution management systems 226, and possibly other non-microgrid sections 230.

According to an example embodiment of the invention, the microgrid controller 202 may include a memory 204, one or more processors 206, one or more input/output interfaces 208, and/or one or more network interfaces 210. In an example embodiment, the memory 204 may include an operating system 212, data 214, and/or computer readable instructions. In an example embodiment, the memory may utilize an aggregator module 216 and/or a conservation voltage reduction factor module (CVR) 218. According to an example embodiment, the conservation voltage reduction factor may be representative of the percent change in load consumption resulting from a one percent reduction in voltage. CVR factors in a range of approximately 0.7 have been found to be typical in Northwest Energy Efficiency Alliance's (NEEA) Distribution Efficiency Initiative (DEI). According to an example embodiment of the invention, the CVR module 218 may be utilized to adjust feeder voltage at the substation and along the distribution feeder to maintain service voltage within limits set forth in industry standards, such as ANSI C84.1 in North America.

In accordance with certain example embodiments of the invention, the MCG 202 may be in communication with one or more microgrids 220. The microgrid 220 may include devices 222 such as loads, power storage devices, and/or energy generation devices. According to an example embodiment, a communications network 224 may be utilized for communication among the MCG 202 and a distribution management system (DMS) 226. In an example embodiment, the DMS 226 may include an integrated volt/VAR control module 228. According to an example embodiment, the DMS 226 may be in communication with non-microgrid 230 assets or branches of the distribution network. According to example embodiments of the invention, the DMS 226 may provide the control for volt/VAR regulation within the non-microgrid sections of the network, while the DMS 226 may communicate with microgrid controllers (MCG) 202 for controlling/coordinating volt/VAR regulation of microgrids 220. In an example embodiment, the CVR module 218 associated with the microgrid controller 202, may be utilized to work in conjunction with the feeder network, distribution management system (DMS) 226, microgrids 220, and non-microgrids 230.

According to an example embodiment, the DMS 226 may, in addition to the IVVC module 228, include its own operating system, data, aggregator, CVR module, processors, input/output interfaces and network interfaces, similar to those as described with respect to the MCG 202 above.

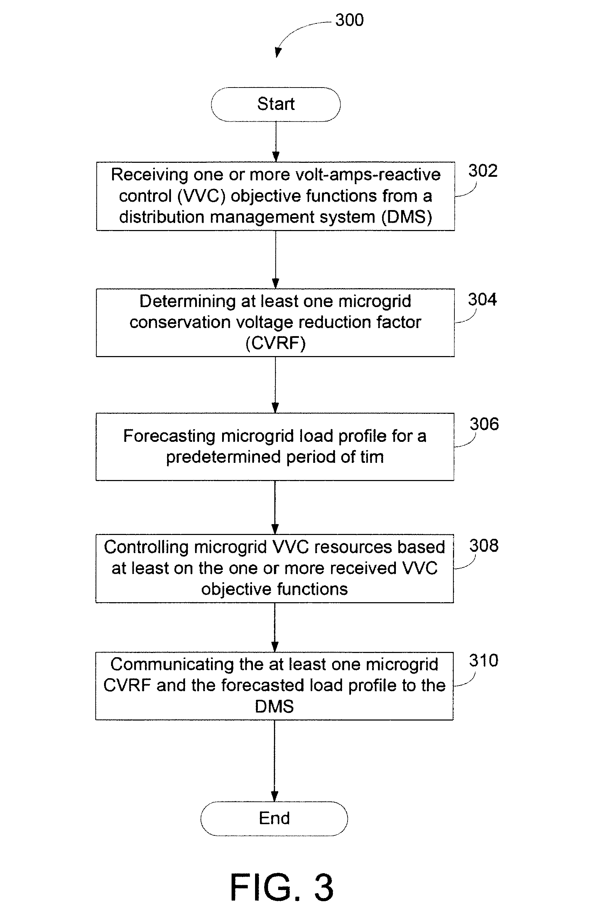

An example method 300 for coordinating voltage and volt-amps-reactive (VAR) control (VVC) in power distribution networks will now be described with reference to the flowchart of FIG. 3. The method 300 starts in block 302, and according to an example embodiment of the invention, includes receiving one or more VVC objective functions from a distribution management system (DMS). In block 304, and according to an example embodiment, the method 300 includes determining at least one microgrid conservation voltage reduction factor (CVRF). In block 306, and according to an example embodiment, the method 300 includes forecasting microgrid load profile for a predetermined period of time. In block 308, and according to an example embodiment, the method 300 includes controlling microgrid VVC resources based at least on the one or more received VVC objective functions. In block 310, and according to an example embodiment, the method 300 includes communicating the at least one microgrid CVRF and the forecasted load profile to the DMS. The method 300 ends in block 310.

In accordance with certain example embodiments of the invention, the control of the distribution network can be viewed from the perspective of the DMS (226). In this example embodiment, a method may include one or more of the following: providing one or more VVC objective functions to one or more MGCs 202; determining at least one distribution system conservation voltage reduction factor (CVRF); forecasting distribution system load profile or profiles for a predetermined period of time; controlling distribution system (non-microgrid associated) resources based at least on the one or more received VVC objective functions, and receiving the at least one microgrid CVRF and the forecasted load profile from the MGC(s) 202.

According to an example embodiment of the invention, coordinating voltage and volt-amps-reactive (VAR) control (VVC) in power distribution networks may include one or more of aggregating microgrid resource capability information, or communicating microgrid resource capability information to the DMS 226. In an example embodiment, microgrid VVC resources may include one or more capacitor banks. In an example embodiment, microgrid VVC resources may include one or more voltage regulators. According to an example embodiment, the distribution system (non-microgrid) VVC resources may include one or more capacitor banks and/or one or more voltage regulators.

According to an example embodiment of the invention, at least one of the one or more VVC objective functions may include instructions to achieve one or more of: minimize one or more losses, minimize load over a predefined period of time, maximize load over a predefined period of time, or maintain an average voltage level within the network. In an example embodiment, at least one of the one or more VVC objective functions may include instructions to adjust one or more of distribution system VVC or microgrid VVC resources.

According to example embodiments of the invention, a system and/or apparatus may be provided. For example, the system can include at least one power distribution network. In an example embodiment, the system and/or apparatus may include at least one distribution management system (DMS), one or more microgrids, one or more microgrid controllers (MGC) in communication with the one or more microgrids and the DMS, wherein the one or more MGC comprises at least one memory for storing data and computer-executable instructions. In example embodiments, the system and/or apparatus may include at least one processor configured to access the at least one memory and further configured to execute the computer-executable instructions for: receiving one or more VVC objective functions from a distribution management system (DMS); determining at least one microgrid conservation voltage reduction factor (CVRF); forecasting microgrid load profile for a predetermined period of time; controlling microgrid resources based at least on the one or more received objective functions; and communicating the at least one microgrid CVRF and the forecasted load profile to the DMS.

According to an example embodiment, the system and/or apparatus may include at least one memory area associated with the distribution system (excluding the microgrid portion) and further configured to execute the computer-executable instructions for: providing one or more VVC objective functions to the MGC(s); determining at least one distribution system CVRF; forecasting distribution system load profile for a predetermined period of time; controlling distribution system VVC resources based at least on the one or more VVC objective functions; and receiving the at least one microgrid CVRF and the forecasted load profile from the MGC(s). According to an example embodiment, one of the one or more MCG may be further configured for aggregating microgrid resource capability information and/or communicating the microgrid resource capability information to the DMS. According to example embodiments of the invention, microgrid VVC resources may include one or more capacitor banks and/or one or more voltage regulators.

According to an example embodiment of the invention, at least one of the one or more objective functions associated with the system or the apparatus may include instructions to achieve one or more of: minimize one or more losses, minimize load over a predefined period of time, maximize load over a predefmed period of time, or maintain an average voltage level within the network. In an example embodiment, at least one of the one or more objective functions can include instructions to adjust one or more VVC resources.

Accordingly, example embodiments of the invention can provide the technical effects of creating certain systems, methods, and apparatus that provide a centralized/distributed VVC that may help minimize losses associated with power distribution. Example embodiments of the invention can also provide the technical effects of creating certain systems, methods, and apparatus that can reduce or increase a load associated with the power distribution network, as needed. Example embodiments of the invention can also provide the technical effects of creating certain systems, methods, and apparatus that can set an average voltage level throughout the entire distribution system, or set a voltage level to specific portions of the network.

In example embodiments of the invention, the power distribution system 100 and the microgrid controller system 202 may include any number of hardware and/or software applications that are executed to facilitate any of the operations.

In example embodiments, one or more I/O interfaces may facilitate communication between the power distribution system 100 and the microgrid controller system 202, and one or more input/output devices. For example, a universal serial bus port, a serial port, a disk drive, a CD-ROM drive, and/or one or more user interface devices, such as a display, keyboard, keypad, mouse, control panel, touch screen display, microphone, etc., may facilitate user interaction with the power distribution system 100 and the microgrid controller system 202. The one or more I/O interfaces may be utilized to receive or collect data and/or user instructions from a wide variety of input devices. Received data may be processed by one or more computer processors as desired in various embodiments of the invention and/or stored in one or more memory devices.

One or more network interfaces may facilitate connection of the power distribution system 100 and the microgrid controller system 202 inputs and outputs to one or more suitable networks and/or connections; for example, the connections that facilitate communication with any number of sensors associated with the system. The one or more network interfaces may further facilitate connection to one or more suitable networks; for example, a local area network, a wide area network, the Internet, a cellular network, a radio frequency network, a Bluetooth™ (Owned by Telefonaktiebolaget LM Ericsson) enabled network, a Wi-Fi™ (owned by Wi-Fi Alliance) enabled network, a satellite-based network any wired network, any wireless network, etc., for communication with external devices and/or systems.

As desired, embodiments of the invention may include the power distribution system 100 and the microgrid controller system 202 with more or less of the components illustrated in FIGs. 1 and 2.

Certain embodiments of the invention are described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer-usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

While certain embodiments of the invention have been described in connection with what is presently considered to be the most practical and various embodiments, it is to be understood that the invention is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the invention, including the best mode, and also to enable any person skilled in the art to practice certain embodiments of the invention, including making and using any devices or systems and performing any incorporated methods. The patentable scope of certain embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for coordinating voltage and volt-amps-reactive (VAR) control (VVC) in power distribution networks, the method comprising:
receiving one or more VVC objective functions from a distribution management system (DMS) (102, 226);
determining at least one microgrid conservation voltage reduction factor (CVRF);
forecasting microgrid load profile for a predetermined period of time;
controlling microgrid VVC resources based at least on the one or more received VVC objective functions; and
communicating the at least one microgrid CVRF and the forecasted load profile to the DMS (226).

2. The method of claim 1, further comprising aggregating microgrid resource capability information.

3. The method of claim 1 or claim 2, further comprising communicating microgrid resource capability information to the DMS (226).

4. The method of claim 1, 2 or 3, wherein microgrid VVC resources comprise one or more capacitor banks.

5. The method of any one of claims 1 to 4, wherein microgrid VVC resources comprise one or more voltage regulators.

6. The method of any one of claims 1 to 5, wherein at least one of the one or more VVC objective functions comprises instructions to achieve one or more of: minimize one or more losses, minimize load over a predefined period of time, maximize load over a predefined period of time, or maintain an average voltage level within the network.

7. The method of any one of claims 1 to 6, wherein at least one of the one or more VVC objective functions comprises instructions to adjust one or more of distribution system VVC or microgrid VVC resources.

8. A system comprising:
at least one power distribution network (100);
at least one distribution management system (DMS) (102, 226);
one or more microgrids (106, 107, 220);
one or more microgrid controllers (MGC) (104, 105, 202) in communication with the one or more microgrids (106, 107, 220) and the DMS (102, 226), wherein the one or more MGC (104, 105, 202) comprises at least one memory (204) for storing data (214) and computer-executable instructions; and
at least one processor (206) configured to access the at least one memory (204) and further configured to execute the computer-executable instructions for performing the method of claim 1.

9. The system of claim 8, wherein at least one of the one or more MCG (104, 105, 202) is further configured for aggregating microgrid resource capability information.

10. The system of claim 8 or claim 9, wherein at least one of the one or more MCG (104, 105, 202) is further configured communicating the microgrid resource capability information to the DMS (102, 226).

11. The system of claim 8, 9 or 10, wherein microgrid VVC resources comprise one or more capacitor banks.

12. The system of any one of claims 8 to 11, wherein microgrid VVC resources comprise one or more voltage regulators.

13. The system of any one of claims 8 to 12, wherein at least one of the one or more objective functions comprises instructions to achieve one or more of: minimize one or more losses, minimize load over a predefined period of time, maximize load over a predefined period of time, or maintain an average voltage level within the network.

14. The system of any one of claims 8 to 13, wherein at least one of the one or more objective functions comprises instructions to adjust one or more VVC resources.

15. An apparatus comprising:
at least one distribution management system (DMS) (102, 226);
one or more microgrid controllers (MGC) (104, 105, 202) in communication with one or more microgrids and the DMS (102, 226), wherein the one or more MGC comprises at least one memory (204) for storing data and computer-executable instructions; and
at least one processor (206) configured to access the at least one memory (204) and further configured to execute computer-executable instructions for performing the method of any one of claims 1 to 7.
